# EUROPEAN PATENT SPECIFICATION

(11) **EP 3 326 837 B1**
(45) Date of publication and mention of the grant of the patent: **24.07.2019**
(21) Application number: 17202155.2
(22) Date of filing: 16.11.2017
(51) Int. Cl.: B60C 1/00, C08L 9/00, C08L 9/06

(54) **RUBBER COMPOSITION CONTAINING SOYBEAN OIL AND TIRE WITH COMPONENT**
KAUTSCHUKZUSAMMENSETZUNG MIT SOJABOHNENÖL UND REIFEN MIT KOMPONENTE
COMPOSITION DE CAOUTCHOUC CONTENANT DE L'HUILE DE SOJA ET PNEU AYANT UN COMPOSANT

(30) Priority: 28.11.2016 US 201615361521
(43) Date of publication of application: 30.05.2018
(73) Proprietor: The Goodyear Tire & Rubber Company, Akron, OH 44316 (US)
(72) Inventor: RODEWALD, Stephan, Canal Fulton, OH Ohio 44614 (US); PAPAKONSTANTOPOULOS, George Jim, Medina, OH Ohio 44256 (US); HAHN, Bruce Raymond, Hudson, OH Ohio 44210 (US)
(74) Representative: Kutsch, Bernd

(56) References cited:
- EP-A1- 2 733 168
- WO-A1-2016/069012
- WO-A2-2010/111069

## Description

### Field of the Invention

This invention relates to a rubber composition comprising at least one conjugated diene-based elastomer containing triglyceride based specialized soybean oil having a high mono-unsaturated oleic acid ester component and to a tire with a component thereof.

### Background of the Invention

Rubber compositions are often desired for tire components where one or more of uncured rubber processability and cured rubber composition properties are promoted.

Various diene-based elastomers are sometimes blended with petroleum based oil to improve their uncured processing which may sometimes also improve various cured rubber properties.

Sometimes soybean oil has been suggested for blending with various diene-based elastomers instead of or in combination with petroleum based oil for such purposes. For example, see US-B-Nos 6,448,318, US-B-7,919,553, US-B-8,100,157, US-B-8,022,136 and US-B-8,044,118 and US-A-2014/0155660.

Triglycerides are main constituents of plant derived oils such as soybean oil which are fatty acid esters formed from glycerol (a trihydric alcohol containing three hydroxyl groups) and thereby containing three fatty acid groups.

Soybean oil comprises mixed saturated, mono-unsaturated and polyunsaturated triglyceride esters of fatty acids. The unsaturated ester content of the soybean oil is understood to conventionally comprise a minor mono-unsaturated triglyceride ester content in a form of oleic acid based ester (e.g. 20 to 35 percent of the unsaturated fatty acid ester components of the soybean oil, or 20 to 30 percent of the saturated and unsaturated acid ester components), and therefore a major content of unsaturated esters of the soybean oil comprises 65 to 80 percent poly-unsaturated fatty acid esters containing primarily di-functional linoleic acid ester and tri-functional linolenic acid ester.

It is contemplated that a significant decrease in the unsaturation content of the soybean oil in a sense of a significant increase in the mono unsaturated acid ester component (increase in the oleic acid ester component) of the soybean oil with a corresponding decrease in the poly unsaturated acid ester component (decrease in the polyunsaturated linoleic and linolenic acid ester components) might have some effect on the properties of rubber compositions containing the specialized soybean oil which is the subject of this evaluation.

Accordingly, a specialized soybean oil containing a significantly reduced unsaturation content (resulting from a significantly increased mono-unsaturated oleic acid ester content) is desired to be evaluated for use with various diene-based elastomers. Such specialized soybean oil is to be obtained as a natural vegetable oil from a hybrid soybean plant.

In one embodiment, at least 65, alternately 75 to 95, percent of the unsaturated fatty acid esters of the soybean oil comprises mono-unsaturated oleic acid ester (wherein the combination of saturated and unsaturated fatty acids contain 65 to 90 percent of the mono-unsaturated oleic acid ester) and with the remainder of the unsaturated fatty acid esters comprising poly-unsaturated fatty acid esters.

For such evaluation, it is important to appreciate that the triglyceride ester based soybean oil is chemically differentiated from petroleum (hydrocarbon) based oils in a sense that such specialized soybean oil contains a significant degree of mono-unsaturation (from oleic acid) and is clearly not a linear or an aromatic petroleum based oil.

The chemical composition of soybean oil is determined by gas chromatographic (GC) analysis according to ASTM D5974.

For the gas chromatographic analysis (GC analysis), the triglycerides of the soybean oil are converted into fatty acid methyl esters by reflux in an acidic methanol-toluene azeotrope before the GC analysis. Gas chromatographic analysis of the fatty acid methyl esters shows the high degree of mono-unsaturation of the triglyceride ester based specialized soybean oil.

The triglyceride based specialized soybean oil thereby contains a high content of mono-unsaturated oleic fatty acid ester component of the triglyceride esters and minor content of di-unsaturated linoleic acid and tri-unsaturated linolenic acid ester component of the triglyceride compared to what is understood to be a more conventional soybean oil.

The challenge of combining such high mono-unsaturated triglyceride based specialized soybean oil for use as a rubber processing oil instead of and in contrast to petroleum based oil and more conventional soybean oil with diene based elastomers with reinforcing filler containing precipitated silica in an internal rubber mixer (e.g. Banbury™ mixer) is to be evaluated with results being unknown until such evaluation is undertaken.

In the description of this invention, the terms "compounded" "rubber compositions" and "compounds", where used, refer to rubber compositions which have been compounded, or blended, with appropriate rubber compounding ingredients. The terms "rubber", "polymer" and "elastomer" may be used interchangeably unless otherwise indicated. The amounts of materials are usually expressed in parts of material per 100 parts of rubber by weight (phr).

### Summary and Practice of the Invention

The invention relates to a rubber composition in accordance with claim 1.

Dependent claims refer to preferred embodiments of the invention.

In accordance with a preferred aspect of this invention, a rubber composition is provided comprising, based on parts by weight per 100 parts by weight of elastomer (phr):
(A) at least one conjugated diene-based elastomer;
(B) from 5 to 60, alternately from 10 to 40, phr of triglyceride ester based soybean oil where unsaturated fatty acid ester components thereof comprise a combination of mono-unsaturated oleic acid ester, di-unsaturated linoleic acid ester and tri-unsaturated linolenic acid ester components wherein said oleic acid ester component comprises at least 65 percent and alternately from 75 to 95 percent of said fatty acid ester components; and
(C) from 30 to 140, alternately from 50 to 120 phr, of a reinforcing filler comprising:
   (1) carbon black, preferably rubber reinforcing carbon black, or
   (2) silica, preferably precipitated silica (amorphous silica), or
   (3) combination of said carbon black and said silica (containing, for example, 20 to 99 weight percent of silica, alternately from 55 to 99 weight percent silica, for a silica-rich reinforcing filler),
   wherein said silica or precipitated silica is provided together with silica coupler (silica coupling agent) for said silica having a moiety reactive with hydroxyl groups (e.g. silanol groups) on said silica and another different moiety interactive with said diene-based elastomer(s).

In one embodiment, said relatively high oleic acid based ester content soybean oil contains a minimum of 1 percent tri-functional linolenic acid based ester and typically in a range of from 1.5 to 5 percent of said linolenic acid based ester.

In one embodiment, because of inherent inconsistencies of compositions of various natural vegetable triglyceride oils, including for example, whether they contain 1.5 to 3.5 percent of the tri-functional linolenic acid based ester of soybean oil, it is desired that the specialized soybean oil is exclusive of other vegetable triglyceride oils, including, for example, vegetable triglyceride oils which do not contain at least one percent linolenic acid ester.

In one embodiment, said specialized soybean oil is exclusive of plasticized starch containing soybean oil.

In one embodiment, a tire is provided having a component comprising such rubber composition.

In one embodiment, a tire is provided having a tread comprising such rubber composition.

It is important to appreciate that such triglyceride ester based specialized soybean oil is derived from a naturally occurring vegetable, namely soybeans.

The silica or precipitated silica (synthetic amorphous precipitated silica) may be provided as:
(A) a precipitated silica hydrophobated by reaction in situ within the rubber composition with said silica coupling agent, or
(B) a pre-hydrophobated precipitated silica (pre-hydrophobated prior to its addition to the rubber composition comprising having been hydrophobated by reaction of precipitated silica with said silica coupling agent to form a composite thereof prior to its addition to the rubber composition.

In one embodiment, where said precipitated silica is a pre-hydrophobated precipitated silica, additional silica coupler may be added to the rubber composition, if desired.

In one embodiment, where said precipitated silica is a pre-hydrophobated precipitated silica, additional precipitated silica (non-pre-hydrophobated precipitated silica) may be added to the rubber composition, if desired.

In one embodiment, the rubber composition is free of petroleum based rubber processing oil.

Representative examples of various diene-based elastomers are, for example, at least one of cis 1,4-polyisoprene, cis 1,4-polybutadiene, isoprene/butadiene, styrene/isoprene, styrene/butadiene and styrene/isoprene/butadiene elastomers. Additional examples of elastomers which may be used include 3,4-polyisoprene rubber, carboxylated rubber, silicon-coupled and tin coupled star-branched elastomers. Often desired rubber or elastomers are cis 1,4-polybutadiene, styrene/butadiene rubber and cis 1,4-polyisoprene rubber.

A reference to a cis-1,4-polybutadiene is preferably a 1,4-polybutadiene having at least 92 percent cis-content, more preferably at least 95 percent cis-content or at least 98 percent cis-content.

A reference to a cis-1,4-polyisoprene is preferably a 1,4-polyisoprene having at least 90 percent cis-content, more preferably at least 92 percent cis-content or at least 95 percent cis-content.

In one embodiment at least one of such diene-based elastomers may be a functionalized styrene/butadiene elastomer or functionalized cis 1,4-polybutadiene elastomer containing at least one functional group reactive with hydroxyl groups (e.g. reactive with silanol groups) contained on the precipitated silica reinforcing filler to aid in promoting precipitated silica reinforcement of the rubber composition. Such functional group may comprise at least one of amine, siloxy, carboxyl, hydroxyl groups, and thiol groups, which may include, for example, a combination of siloxy and thiol groups, as being functional groups which are reactive with hydroxyl groups (e.g. silanol groups) contained on precipitated silica. In one embodiment, the functionalized diene-based elastomer is at least one of styrene/butadiene rubber and cis 1,4-polybutadiene rubber, desirably a styrene/butadiene rubber.

In one embodiment, said functionalized diene-based elastomer is end-chain functionalized or is in-chain functionalized.

In one embodiment, at least one of said diene-based elastomers may be a tin coupled, or silicon coupled, particularly tin coupled, elastomer (e.g. styrene/butadiene elastomer). Such coupled elastomer may, for example, be used to promote a beneficial improvement (reduction) in tire treadwear and a beneficial reduction in tire rolling resistance when used in tire tread rubber compositions. Such tin coupled styrene/butadiene elastomer may be prepared, for example, by coupling the elastomer with a tin coupling agent at or near the end of the polymerization used in synthesizing the elastomer. In the coupling process, live polymer chain ends react with the tin coupling agent, thereby coupling the elastomer. For example, up to four live polymer chain ends can react with tin tetrahalides, such as tin tetrachloride, thereby coupling the polymer chains together.

The coupling efficiency of the tin coupling agent is dependent on many factors, such as the quantity of live chain ends available for coupling and the quantity and type of polar modifier, if any, employed in the polymerization. For instance, tin coupling agents are generally not as effective in the presence of polar modifiers. However, polar modifiers such as tetramethylethylenediamine, are frequently used to increase the glass transition temperature of the rubber for improved properties, such as improved traction characteristics in tire tread compounds. Coupling reactions that are carried out in the presence of polar modifiers typically have a coupling efficiency of 50 to 60 percent in batch processes.

In cases where the tin coupled elastomer will be used in rubber compositions that are loaded primarily with carbon black reinforcement, the coupling agent for preparing the elastomer may typically be a tin halide. The tin halide will normally be a tin tetrahalide, such as tin tetrachloride, tin tetrabromide, tin tetrafluoride or tin tetraiodide. However, mono-alkyl tin trihalides can also optionally be used. Polymers coupled with mono-alkyl tin trihalides have a maximum of three arms. This is, of course, in contrast to elastomers coupled with tin tetrahalides which have a maximum of four arms. To induce a higher level of branching, tin tetrahalides are normally preferred. The tin tetrachloride is usually the most preferred.

In cases where the coupled elastomer may be used in compounds that are loaded with high levels of silica, the coupling agent for preparing the elastomer may, if desired, be a silicon halide. The silicon-coupling agents that can be used will normally be silicon tetrahalides, such as silicon tetrachloride, silicon tetrabromide, silicon tetrafluoride or silicon tetraiodide. However, mono-alkyl silicon trihalides can also optionally be used. Elastomers coupled with silicon trihalides have a maximum of three arms. This is, of course, in contrast to elastomers coupled with silicon tetrahalides during their manufacture which have a maximum of four arms. To induce a higher level of branching, if desired, of the elastomer during its manufacture, silicon tetrahalides are normally preferred. In general, silicon tetrachloride is usually the most desirable of the silicon-coupling agents for such purpose.

Such precipitated silicas may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such precipitated silicas may, for example, also be characterized by having a dibutylphthalate (DBP) absorption value, for example, in a range of 100 to 400, and more usually 150 to 300 cc/100g.

Various commercially available precipitated silicas may be used, such as silicas from PPG Industries under the Hi-Sil trademark with designations 210 and 243, silicas from Solvay with, for example, designations of Z1165MP and Z165GR, silicas from Evonik with, for example, designations VN2 and VN3, and chemically treated precipitated silicas such as for example Agilon™ 400 from PPG Industries.

Representative examples of rubber reinforcing carbon blacks are, for example, and not intended to be limiting, those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

Other fillers may be used in the vulcanizable rubber composition including, but not limited to, particulate fillers comprising at least one of clay, exfoliated clay, graphene, metal oxides, carbon nanotubes, as well as ultra high molecular weight polyethylene (UHMWPE) and particulate polymer gels such as those disclosed in US-B-6,242,534; US-B-6,207,757; US-B-6,133,364; US-B-6,372,857; US-B-5,395,891; or US-B-6,127,488, and plasticized starch composite filler such as that disclosed in US-B-5,672,639. One or more of such fillers, as well as other fillers, may be used in an amount ranging, for example, from 1 to 20 phr.

Representative of aforesaid silica coupling agents comprise, for example:
(A) bis(3-trialkoxysilylalkyl) polysulfide containing an average in range of from 2 to 4, optionally an average of from 2 to 2.6 or from 3.4 to 3.8, connecting sulfur atoms in its polysulfidic bridge, or
(B) an organoalkoxymercaptosilane, or
(C) their combination.

Representative of such bis(3-trialkoxysilylalkyl) polysulfide is bis(3-triethoxysilylpropyl) polysulfide.

It is readily understood by those having skill in the art that the vulcanizable rubber composition would be compounded by methods generally known in the rubber compounding art, such as, for example, mixing various additional sulfur-vulcanizable elastomers with said diene-based elastomer containing rubber composition and various commonly used additive materials such as, for example, sulfur and sulfur donor curatives, sulfur vulcanization curing aids, such as activators and retarders and processing additives, resins including tackifying resins and plasticizers, fillers such as rubber reinforcing fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of tackifier resins, if used, may comprise, for example, 0.5 to 10 phr, usually 1 to 5 phr. Typical amounts of processing aids comprise 1 to 50 phr. Additional petroleum based rubber process oils, if desired, may be added in very low levels during the blending of the rubber composition in addition to the algae rubber processing oil as the major portion of the processing oil (e.g. greater than 50 percent of the rubber processing oil) or as the only rubber processing oil. The additional petroleum based or derived rubber processing oils may include, for example, aromatic, paraffinic, naphthenic, and low PCA oils such as MEW, TDAE and heavy naphthenic, although low PCA oils might be preferred. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, 2 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The vulcanizable rubber composition containing the specialized soybean oil as a rubber processing oil may be incorporated in a variety of rubber components of an article of manufacture such as, for example, a tire. For example, the rubber component for the tire is a tread.

The pneumatic tire of the present invention may be a race tire, passenger tire, aircraft tire, agricultural tire, earthmover tire, off-the-road tire or truck tire. Usually desirably the tire is a passenger or truck tire. The tire may also be a radial or bias ply tire, with a radial ply tire being usually desired.

Vulcanization of the pneumatic tire of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following evaluative examples are presented for the purposes of illustrating the present invention. All parts and percentages are parts by weight, usually parts by weight per 100 parts by weight rubber (phr) unless otherwise indicated.

### EXAMPLE I

In this example, the effect of using a specialized soybean oil was evaluated for use as a triglyceride based processing oil for a rubber composition as compared to petroleum based processing oil and also compared to use of triglyceride based conventional soybean oil. For this Example, the rubber compositions evaluated were a 70/30 blend of styrene/butadiene rubber (S-SBR) and high cis-polybutadiene rubber (PBD).

Comparative rubber Samples B and D contained the aforesaid conventional soybean oil.

Experimental rubber Samples A and C contained the specialized soybean oil.

The rubber Samples were prepared by mixing the elastomers with reinforcing fillers comprising rubber reinforcing carbon black and precipitated silica together with a silica coupling agent for the precipitated silica.

For such preparation, ingredients, other than sulfur and sulfur accelerator curatives, were mixed a first non-productive mixing stage (NP1) in an internal rubber mixer for 4 minutes to a temperature of 160°C. The rubber composition was subsequently mixed in a productive mixing stage (P) in an internal rubber mixer with a sulfur cure package, namely sulfur and sulfur cure accelerator(s), for 2 minutes to a temperature of 105°C. The rubber composition is removed from its internal mixer after the non-productive mixing step and cooled to below 40°C before the final productive mixing stage.

The basic formulation for the Comparative rubber Samples B and D and Experimental rubber Samples A and C are presented in the following Table 1 expressed in parts by weight per 100 parts of rubber (phr), with the values being rounded, unless otherwise indicated.

Formulations for Comparative rubber Sample B and Experimental rubber Sample A were the same as formulations for Comparative rubber Sample D and Experimental rubber Sample C, respectively, except for their cure packages in which a slightly higher level of curatives (slightly higher level of sulfur and accelerators) was used for Comparative rubber Sample D and Experimental rubber Sample C. On this basis, it would be expected that a higher cure level with an accompanying higher storage modulus G' would be obtained for both of cured Comparative rubber Sample D and Experimental rubber Sample C compared to cured Comparative rubber Sample B and Experimental rubber Sample A, respectively.

**Table 1**

| Non-Productive Mixing Stage (NP1) | Parts by weight (phr) |
|---|---|
| cis 1,4-polybutadiene rubber (PBO)¹ | 30 |
| Styrene/butadiene rubber (S-SBR)² | 70 |
| Carbon black³ | 85 |
| Specialized soybean oil⁴ | 30 or 0 |
| Conventional soybean oil⁵ | 30 or 0 |
| Zinc oxide | 2 |
| Fatty acid⁶ | 3 |
| Wax (paraffinic and crystalline) | 2 |

| Productive Mixing Stage (P) | |
|---|---|
| Sulfur | 1.8 and 2 |
| Sulfur cure accelerator(s)⁷ | 2.8 and 4 |

| | |
|---|---|
| ¹Cis-polybutadiene rubber as BUD1207™ from The Goodyear Tire & Rubber Company having a Tg (glass transition temperature) of -102°C ²Styrene/butadiene, solution polymerization prepared, as Solflex1 6S42 from The Goodyear Tire & Rubber Company having a Tg of -42°C and bound styrene content of 16 percent ³N330, an ASTM designation ⁴Soybean oil triglyceride, namely a soybean plant-derived triglyceride oil comprising saturated and unsaturated fatty acid esters with its unsaturated fatty acid ester portion comprising primarily of mono-unsaturated oleic fatty acid ester, as Plenish™ from DuPont, comprising 89 percent mono-unsaturated oleic acid ester, 8 percent linoleic acid ester and tri-unsaturation linolenic acid ester component of 3 percent. The fatty acid esters are saturated esters such as, for example palmitic and stearic acid esters. ⁵Soybean oil triglyceride, namely a soybean plant-derived triglyceride oil comprising saturated and unsaturated fatty acid esters with a minor portion of its unsaturated fatty acid ester being mono-unsaturated oleic fatty acid ester, as soybean oil from Cargill Dressings, comprising 32 percent oleic acid ester, 68 percent poly-unsaturated fatty acid esters such as for example linoleic acid ester and linolenic acid ester. The saturated fatty acid esters are, for example palmitic and stearic acid esters. ⁶Fatty acid primarily comprising stearic, palmitic and oleic acids ⁷Sulfenamide and diphenylguanidine sulfur cure accelerators | |

The following Table 2 illustrates cure behavior and various physical properties of rubber Comparative rubber Samples B and D (containing conventional soybean oil), and Experimental rubber Samples A and C (containing specialized soybean oil) based upon the basic formulation of Table 1. Where cured rubber samples are examined, such as for the toughness and hot rebound values, the rubber samples were cured for 14 minutes at a temperature of 160°C.

**Table 2**

| | Parts (phr) | | | |
|---|---|---|---|---|
| Materials | Exp. A | Comp. B | Exp. C | Comp. D |
| Polybutadiene rubber | 30 | 30 | 30 | 30 |
| Styrene/butadiene rubber | 70 | 70 | 70 | 70 |
| Carbon black | 85 | 85 | 85 | 85 |
| Specialized soybean oil | 30 | 0 | 30 | 0 |
| Conventional soybean oil | 0 | 30 | 0 | 30 |
| Sulfur | 1.8 | 1.8 | 2 | 2 |
| Sulfur cure accelerators | 2.8 | 2.8 | 3 | 3 |
| | | | | |

| Processing Uncured Rubber | | | | |
|---|---|---|---|---|
| Storage modulus (G'), 0.83 HZ, 100°C, 15% strain (MPA) | 178 | 177 | 174 | 174 |
| | | | | |

| Cure Data | | | | |
|---|---|---|---|---|
| Minimum torque, dNm | 1.6 | 1.6 | 1.6 | 1.6 |
| Maximum torque, dNm | 9.8 | 9 | 10.3 | 9.7 |
| Delta torque, dNm | 8.2 | 7.5 | 8.7 | 8.1 |
| T90, minutes | 6.5 | 6.4 | 6.1 | 5.8 |
| | | | | |

| RPA Dynamic Property. Cured Rubber. 100°C. 11 Hz. 15% strain | | | | |
|---|---|---|---|---|
| Storage modulus (G'), kPa | 1424 | 1297 | 1494 | 1380 |
| Tan delta, 15% strain | 0.14 | 0.16 | 0.14 | 0.15 |
| | | | | |

| Tensile Properties. Room Temperature | | | | |
|---|---|---|---|---|
| Modulus, 100%, kPa | 3.2 | 2.7 | 3.5 | 2.9 |
| Modulus, 300%, kPa | 12.7 | 10.6 | 13.9 | 11.9 |
| Tensile strength, MPa | 15.9 | 16 | 15 | 15.6 |
| Elongation at break, (%) | 373 | 443 | 326 | 391 |

As seen in Table 2, the results show the benefit of use of the specialized soybean oil in Experimental rubber Samples A and C, when used instead of the conventional soybean oil in Comparative rubber Samples B and D.

It is observed that that the storage modulus (G') values of 1424 and 1494 kPa, respectively, for cured Experimental rubber Samples A and C, respectively, which contained the specialized soybean oil, are higher than that the storage modulus (G') values of 1297 and 1380 kPa, respectively, for cured Comparative rubber Samples B and D, respectively, which contained the conventional soybean oil.

It is considered that the higher storage modulus (G') values for the Experimental rubber

Samples A and C are an indication beneficially better tire handling performance for tires having treads of such rubber compositions containing the specialized soybean oil.

It can be also seen in Table 2 that the tan delta values of 0.14 for cured Experimental rubber Samples A and C, which contained the specialized soybean oil, are beneficially lower than that the tan delta values of 0.16 and 0.15, respectively, for cured Comparative rubber Samples B and D, respectively, which contained the conventional soybean oil.

It is considered that the lower tan delta values are an indication of lower hysteresis properties of the Experimental rubber Samples A and C which, in turn, is an indication of beneficially lower internal heat generation of the rubber composition for a tire component (e.g. tire tread) as well as predictably beneficially lower rolling resistance for a tire with tread of such rubber composition.

Therefore, it is concluded that this evaluation has successfully demonstrated a beneficial and significant discovery of use of specialized soybean oil with its significantly lower unsaturation content (significantly higher mono-unsaturation oleic acid ester component content) instead of the more conventional soybean oil with its significantly higher unsaturation content (significantly higher linoleic acid and linolenic component content).

## Claims

1. A rubber composition comprising, based on parts by weight per 100 parts by weight of elastomer (phr):
(A) at least one conjugated diene-based elastomer;
(B) from 5 to 60 phr of a triglyceride ester based on a soybean oil comprising saturated and unsaturated fatty acid esters, where its unsaturated fatty acid esters comprise a combination of mono-unsaturated oleic acid ester, di-unsaturated linoleic acid and tri-unsaturated linolenic acid esters, wherein said oleic acid ester comprises at least 65 percent by weight of said fatty acid esters;
(C) from 30 to 140 phr of a reinforcing filler comprising:
(1) carbon black, or
(2) silica, preferably precipitated silica, or
(3) a combination of carbon black and silica together with a,silica coupling agent for the silica having a moiety reactive with hydroxyl groups on the silica and another different moiety interactive with said diene-based elastomer(s).

2. The rubber composition of claim 1 wherein the unsaturated fatty acid esters of the soybean oil comprises 75 to 95 percent mono-unsaturated oleic acid ester component and contain at least 1 percent of linolenic acid ester.

3. The rubber composition of claims 1 or 2 wherein the silica is a silica, preferably a precipitated silica, hydrophobated by reaction in situ within the rubber composition with said silica coupling agent.

4. The rubber composition of claims 1 or 2 wherein said silica is a pre-hydrophobated silica, preferably precipitated silica, by a reaction of silica with said silica coupling agent to form a composite thereof prior to its addition to the rubber composition.

5. The rubber composition of claim 4 where said silica is a pre-hydrophobated precipitated silica and wherein at least one of said additional silica coupler and additional silica, preferably precipitated, silica is added to the rubber composition.

6. The rubber composition of at least one of the preceding claims wherein said rubber composition is free of petroleum based rubber processing oil.

7. The rubber composition of at least one of the preceding claims wherein said diene-based elastomer comprises at least one of polyisoprene, cis 1,4-polyisoprene, polybutadiene, cis 1,4-polybutadiene, isoprene/butadiene, styrene/isoprene, styrene/butadiene and styrene/isoprene/butadiene elastomers.

8. The rubber composition of at least one of the preceding claims 1 through 7 wherein at least one of said diene based elastomers a functionalized styrene/butadiene elastomer or functionalized polybutadiene or cis 1,4-polybutadiene elastomer end-chain functionalized or in-chain functionalized with at least one of amine, siloxy, thiol and carboxyl groups reactive with hydroxyl groups of said silica.

9. The rubber composition of at least one of the preceding claims wherein at least one of said diene-based elastomers is a tin or silicon coupled elastomer.

10. The rubber composition of at least one of the preceding claims wherein the reinforcing filler comprises a combination of rubber reinforcing carbon black and precipitated silica.

11. The rubber composition of at least one of the preceding claims wherein said rubber composition contains silica or precipitated silica together with silica coupling agent comprising:
(A) bis(3-trialkoxysilylalkyl) polysulfide containing an average in range of from 2 to 4 connecting sulfur atoms in its polysulfidic bridge;
(B) an organoalkoxymercaptosilane; or
(C) their combination.

12. The rubber composition of at least one of the preceding claims wherein said rubber composition contains silica together with a coupling agent comprising a bis(3-triethethoxysilylpropyl) polysulfide having an average of from 2 to 2.6 or from 3.4 to 3.8 connecting sulfur atoms in its polysulfidic bridge.

13. The rubber composition of at least one of the preceding claims wherein said soybean oil comprises saturated and unsaturated fatty acid esters wherein said unsaturated fatty acid esters comprise 75 to 95 percent mono-unsaturated oleic acid ester, wherein said combination of saturated and unsaturated fatty acids contain from 65 to 90 percent mono-unsaturated oleic acid ester.

14. A tire having a component comprising the rubber composition of at least one of the preceding claims.

15. The tire of claim 14 wherein the component is a tread or a tread cap layer.

## Patentansprüche

1. Kautschukzusammensetzung, umfassend basierend auf Gewichtsteilen pro 100 Gewichtsteilen Elastomer (phr):
(A) wenigstens ein konjugiertes Elastomer auf Dienbasis;
(B) 5 bis 60 phr eines Triglyceridesters auf Basis eines Sojabohnenöls, das gesättigte und ungesättigte Fettsäureester umfasst, wobei seine ungesättigten Fettsäureester eine Kombination aus einfach ungesättigten Ölsäureestern, zweifach ungesättigter Linolsäure und dreifach ungesättigten Linolensäureestern umfassen, wobei der Ölsäureester wenigstens 65 Gew.-% der Fettsäureester umfasst;
(C) 30 bis 140 phr eines verstärkenden Füllstoffs, umfassend:
(1) Ruß oder
(2) Siliciumdioxid, bevorzugt gefälltes Siliciumdioxid oder
(3) eine Kombination aus Ruß und Siliciumdioxid zusammen mit einem Siliciumdioxid-Kopplungsmittel für das Siliciumdioxid mit einem mit Hydroxolgruppen an dem Siliciumdioxid reaktiven Molekülteil und einem anderen mit dem/den Elastomer(en) auf Dienbasis interaktiven Molekülteil.

2. Kautschukzusammensetzung nach Anspruch 1, wobei die ungesättigten Fettsäureester des Sojaöls 75 bis 95 Prozent einer einfach ungesättigten Ölsäureesterkomponente und wenigstens 1 Prozent Linolensäureester umfassen.

3. Kautschukzusammensetzung nach Anspruch 1 oder 2, wobei das Siliciumdioxid ein Siliciumdioxid ist, bevorzugt ein gefälltes Siliciumdioxid, hydrophobiert durch Reaktion *in situ* innerhalb der Kautschukzusammensetzung mit dem Siliciumdioxid-Kopplungsmittel.

4. Kautschukzusammensetzung nach Anspruch 1 oder 2, wobei das Siliciumdioxid ein vorhydrophobiertes Siliciumdioxid ist, bevorzugt ein gefälltes Siliciumdioxid, durch eine Reaktion von Siliciumdioxid mit dem Siliciumdioxid-Kopplungsmittel, um davon vor seiner Zugabe zu der Kautschukzusammensetzung einen Verbund auszubilden.

5. Kautschukzusammensetzung nach Anspruch 4, wobei das Siliciumdioxid ein vorhydrophobiertes gefälltes Siliciumdioxid ist und wobei das zusätzliche Siliciumdioxid-Kopplungsmittel und/oder das zusätzliche Siliciumdioxid, bevorzugt gefälltes Siliciumdioxid, der Kautschukzusammensetzung zugegeben wird.

6. Die Kautschukzusammensetzung nach wenigstens einem der vorhergehenden Ansprüche, wobei die Kautschukzusammensetzung frei von Kautschukverarbeitungsöl auf Erdölbasis ist.

7. Die Kautschukzusammensetzung nach wenigstens einem der vorhergehenden Ansprüche, wobei das Elastomer auf Dienbasis Polyisopren-, Cis-1,4-Polyisopren-, Polybutadien-, Cis-1,4-Polybutadien-, Isopren-/Butadien-, Styrol-/Isopren-, Styrol-/Butadien- und/oder Styrol-/Isopren-/Butadien-Elastomere umfasst.

8. Kautschukzusammensetzung nach wenigstens einem der vorhergehenden Ansprüche 1-7, wobei wenigstens eines der Elastomere auf Dienbasis, ein funktionalisiertes Styrol-/Butadien-Elastomer, ein funktionalisiertes Polybutadien- oder Cis-1,4-Polybutadien-Elastomer, das endkettenfunktionalisiert oder kettenintern funktionalisiert mit Amin-, Siloxy-, Thiol- und/oder Carboxylgruppen ist, mit Hydroxylgruppen des Siliciumdioxids reaktiv ist.

9. Kautschukzusammensetzung nach wenigstens einem der vorhergehenden Ansprüche, wobei wenigstens eines der Elastomere auf Dienbasis ein zinn- oder silikongekoppeltes Elastomer ist.

10. Kautschukzusammensetzung nach wenigstens einem der vorhergehenden Ansprüche, wobei der verstärkende Füllstoff eine Kombination von kautschukverstärkendem Ruß und gefälltem Siliciumdioxid umfasst.

11. Kautschukzusammensetzung nach wenigstens einem der vorhergehenden Ansprüche, wobei die Kautschukzusammensetzung Siliciumdioxid oder gefälltes Siliciumdioxid zusammen mit einem Siliciumdioxid-Kopplungsmittel enthält, umfassend:
(A) Bis-(3-Trialkoxysilylalkyl)-Polysulfid, wobei ein Durchschnitt in dem Bereich von 2 bis 4 verbindenden Schwefelatomen in seiner Polysulfidbrücke enthalten ist;
(B) ein Organoalkoxymercaptosilan; oder
(C) ihre Kombination.

12. Kautschukzusammensetzung nach wenigstens einem der vorhergehenden Ansprüche, wobei die Kautschukzusammensetzung Siliciumdioxid zusammen mit einem Kopplungsmittel enthält, das ein Bis-(3-Triethethoxysilylpropyl)-Polysulfid mit einem Durchschnitt von 2 bis 2,6 oder von 3,4 bis 3,8 verbindenden Schwefelatomen in seiner Polysulfidbrücke umfasst.

13. Kautschukzusammensetzung nach wenigstens einem der vorhergehenden Ansprüche, wobei das Sojaöl gesättigte und ungesättigte Fettsäureester umfasst, wobei die ungesättigten Fettsäureester 75 bis 95 Prozent einfach ungesättigte Ölsäureester umfassen, wobei die Kombination von gesättigten und ungesättigten Fettsäuren 65 bis 90 Prozent einfach ungesättigte Ölsäureester enthält.

14. Reifen mit einer Komponente, die die Kautschukzusammensetzung nach wenigstens einem der vorhergehenden Ansprüche umfasst.

15. Reifen nach Anspruch 14, wobei die Komponente eine Lauffläche oder eine Laufflächenkronenschicht ist.

## Revendications

1. Composition de caoutchouc comprenant, basées sur des parties en poids par 100 parties en poids d'élastomère (phr) :
(A) au moins un élastomère à base de diène conjugué ;
(B) de 5 à 60 phr d'un ester triglycéridique basé sur une huile de soja comprenant des esters d'acides gras saturés et insaturés, dans lequel ses esters d'acides gras saturés comprennent une combinaison d'un ester d'acide oléique mono-insaturé, d'un ester de l'acide linoléique di-insaturé et d'un ester de l'acide linolénique tri-insaturé ; dans lequel ledit ester de l'acide oléique comprend au moins 65 % en poids desdits esters d'acides gras ;
(C) de 30 à 140 phr d'une matière de charge pour le renforcement, comprenant :
(1) du noir de carbone ; ou
(2) de la silice, de préférence de la silice précipitée ; ou
(3) une combinaison de noir de carbone et de silice conjointement avec un agent de couplage pour la silice possédant une fraction apte à réagir avec des groupes hydroxyle sur la silice et une autre fraction différente qui entre en interaction avec ledit/lesdits élastomère(s) à base diénique.

2. Composition de caoutchouc selon la revendication 1, dans laquelle les esters d'acides gras insaturés de l'huile de soja comprennent de 75 à 95 % du composant ester de l'acide oléique mono-insaturé et contiennent au moins 1 % d'ester de l'acide linolénique.

3. Composition de caoutchouc selon la revendication 1 ou 2, dans laquelle la silice représente une silice, de préférence une silice précipitée, qui a été rendue hydrophobe par une mise en réaction in situ au sein de la composition de caoutchouc avec ledit agent de couplage pour la silice.

4. Composition de caoutchouc selon la revendication 1 ou 2, dans laquelle ladite silice représente une silice qui a été préalablement rendue hydrophobe, de préférence une silice précipitée, via une réaction de la silice avec ledit agent de couplage pour la silice afin d'obtenir un composite dudit agent et de ladite silice, avant son addition à la composition de caoutchouc.

5. Composition de caoutchouc selon la revendication 4, dans laquelle ladite silice représente une silice qui a été préalablement rendue hydrophobe ; et dans laquelle au moins un élément choisi parmi une quantité supplémentaire du coupleur pour la silice et une quantité supplémentaire de silice, de préférence de silice précipitée est ajoutée à la composition de caoutchouc.

6. Composition de caoutchouc selon au moins une des revendications précédentes, dans laquelle ladite composition de caoutchouc est exempte d'huile de traitement du caoutchouc à base de pétrole.

7. Composition de caoutchouc selon au moins une des revendications précédentes, dans laquelle ledit élastomère à base diénique comprend au moins un élastomère choisi parmi un élastomère de polyisoprène, un élastomère de 1,4-cis polyisoprène, un élastomère de polybutadiène, un élastomère de 1,4-cis polybutadiène, un élastomère d'isoprène/butadiène, un élastomère de styrène/isoprène, un élastomère de styrène/butadiène et un élastomère de styrène/isoprène/butadiène.

8. Composition de caoutchouc selon au moins une des revendications 1 à 7, dans laquelle au moins un desdits élastomères à base diénique représente un élastomère fonctionnalisé de styrène/butadiène ou un polybutadiène fonctionnalisé ou un élastomère de 1,4-cis polybutadiène fonctionnalisé à l'extrémité de la chaîne ou fonctionnalisé à l'intérieur de la chaîne avec au moins un groupe fonctionnel choisi parmi un groupe aminé, un groupe siloxy, un groupe thiol et un groupe carboxyle apte à réagir avec les groupes hydroxyle de ladite silice.

9. Composition de caoutchouc selon au moins une des revendications précédentes, dans laquelle au moins un desdits élastomères à base diénique représente un élastomère couplé à l'étain ou couplé au silicium.

10. Composition de caoutchouc selon au moins une des revendications précédentes, dans laquelle la matière de charge pour le renforcement comprend une combinaison de noir de carbone pour le renforcement du caoutchouc et d'une silice précipitée.

11. Composition de caoutchouc selon au moins une des revendications précédentes, dans laquelle ladite composition de caoutchouc contient de la silice ou de la silice précipitée de manière conjointe avec un agent de couplage pour la silice comprenant :
(A) un bis(3-trialcoxysilylalkyl) polysulfure contenant en moyenne des atomes de soufre de liaison dans la plage de 2 à 4 dans son pont polysulfure ;
(B) un organoalcoxymercaptosilane ; ou
(C) leur combinaison.

12. Composition de caoutchouc selon au moins une des revendications précédentes, dans laquelle ladite composition de caoutchouc contient de la silice de manière conjointe avec un agent de couplage comprenant un bis (3-triéthoxysilylpropyl) polysulfure contenant en moyenne de 2 à 2,6 ou de 3,4 à 3,8 atomes de soufre de liaison dans son pont polysulfure.

13. Composition de caoutchouc selon au moins une des revendications précédentes, dans laquelle ladite huile de soja comprend des esters d'acides gras saturés et insaturés, dans laquelle lesdits esters d'acides gras insaturés comprennent de 75 à 95 % d'esters de l'acide oléique mono-insaturé ; dans laquelle ladite combinaison d'acides gras saturés et insaturés contient de 65 à 90 % d'ester de l'acide oléique mono-insaturé.

14. Bandage pneumatique possédant un composant comprenant la composition de caoutchouc selon au moins une des revendications précédentes.

15. Bandage pneumatique selon la revendication 14, dans lequel le composant est une bande de roulement ou une couche de chape de bande de roulement.
